# DEMANDE DE BREVET EUROPEEN

(11) **EP 4 767 819 A1**
(43) Date de publication de la demande: **01.07.2026**
(21) Numéro de dépôt: 25225347.1
(22) Date de dépôt: 18.12.2025
(51) Int. Cl.: A01K 1/015

(54) **REVÊTEMENT DE SOL SOUS FORME D'UN TAPIS, ADAPTÉ À RECOUVRIR UN SOL CAILLEBOTIS DANS UNE ENCEINTE D' ÉLEVAGE**

(30) Priorité: 27.12.2024 FR 2415317
(71) Demandeur: Group Elastoteck, 44850 Mouzeil (FR)
(72) Inventeur: BIORET, Jean-Vincent, 44390 PETIT MARS (FR)
(74) Mandataire: Jacobacci & Partners France

(57) **Abrégé**

La présente invention concerne un revêtement de sol (10) sous forme d'un tapis, réalisé dans au moins un matériau apte à subir une déformation élastique, adapté à recouvrir un sol caillebotis (S) dans une enceinte (E) d'élevage.

Le revêtement de sol (10) comporte des rainures (13), séparant des portions d'appui (12) et destinées à recevoir les liquides s'écoulant sur ledit revêtement de sol (10).

Les rainures (13) sont chacune délimitées par une paroi de fond (131), qui comporte des orifices traversants (15) consistant en des fentes longitudinales (15), régulièrement réparties sur la longueur desdites rainures (13).

Les fentes longitudinales (15) présentent un axe longitudinal (15') orienté parallèlement à l'axe longitudinal (13') desdites rainures (13) et présentant une longueur allant de 5 à 35 cm, de préférence de 5 à 20 cm.

## Description

### Domaine technique de l'invention

La présente invention concerne le domaine technique des revêtements de sol sous forme d'un tapis, adaptés à recouvrir un sol caillebotis dans une enceinte d'élevage.

### Etat de la technique

Le confort des animaux constitue un paramètre déterminant dans le rendement d'un élevage, qui influence notamment la santé, la prise alimentaire, la fertilité et la longévité des animaux.

En étable, ce confort implique notamment une évacuation rapide et efficace des déjections générées par les animaux.

Cette gestion des déjections doit en effet permettre de réduire les émanations de gaz et la prolifération de bactéries dans l'enceinte d'élevage, et par conséquent d'améliorer les conditions d'ambiance et les performances sanitaires.

Plus généralement, un revêtement de sol excessivement humide est susceptible de provoquer des problèmes sanitaires au niveau des pieds des animaux, notamment de boiteries, constituant un trouble majeur de santé en élevage.

Une solution consiste alors à équiper les zones de circulation des animaux (aires d'attente, couloirs d'exercice, etc.) avec un sol caillebotis (généralement constitué de plaques de béton préfabriquées).

Toutefois, les déjections sont susceptibles de rendre glissant ce type de sol, avec les risques de chute et de blessure qui en découlent. Les sols caillebotis peuvent également être trop rugueux, au risque d'user les onglons de façon excessive, avec des problèmes de locomotions.

Il existe par conséquent un besoin de solutions techniques permettant une réduction de l'humidité des sols dans les enceintes d'élevage, en particulier les sols caillebotis, cela avantageusement sans nécessiter des travaux de gros œuvre importants, tout en améliorant les conditions d'adhérence et les conditions sanitaires des animaux.

### Présentation de l'invention

Afin de remédier à l'inconvénient précité de l'état de la technique, la présente invention propose un revêtement de sol sous forme de tapis, réalisé dans au moins un matériau apte à subir une déformation élastique, adapté à recouvrir un sol caillebotis dans une enceinte d'élevage.

Le revêtement de sol comprend une embase avec une face inférieure destinée à reposer sur le sol caillebotis, des portions d'appui réparties sur l'embase sur lesquelles les animaux sont destinés à prendre appui, et des rainures séparant les portions d'appui et destinées à recevoir les liquides s'écoulant sur le revêtement de sol, définissant un axe longitudinal.

Les rainures sont chacune délimitées par une paroi de fond correspondant à une bande de l'embase ménagée entre deux portions d'appui. La paroi de fond est délimitée par une face supérieure formant le fond de la rainure et par une face inférieure formant une partie de la face inférieure de l'embase. La paroi de fond comporte des orifices traversants qui débouchent au travers de la face supérieure et de la face inférieure de la paroi de fond.

Selon l'invention, les orifices traversants consistent en des fentes longitudinales régulièrement réparties sur la longueur des rainures. Les fentes longitudinales ont un axe longitudinal orienté parallèlement à l'axe longitudinal des rainures et présentent une longueur allant de 5 à 35 cm, de préférence de 5 à 20 cm.

Selon un autre aspect, le revêtement de sol est caractérisé en ce que les fentes longitudinales ont une longueur allant de 5 à 15 cm.

Selon un autre aspect, le revêtement de sol est caractérisé en ce que la distance entre deux fentes longitudinales successives, ménagées au sein d'une rainure, est de 5 à 20 cm, de préférence de 5 à 15 cm.

Selon un autre aspect, le revêtement de sol est caractérisé en ce que les fentes longitudinales et les rainures définissent des largeurs qui sont identiques les unes par rapport aux autres.

Selon un autre aspect, le revêtement de sol est caractérisé en ce que les rainures sont rectilignes et s'étendent parallèlement les unes par rapport aux autres, délimitant entre elles une pluralité de portions d'appui qui ont chacune la forme d'une bande rectiligne.

Selon un autre aspect, le revêtement de sol est caractérisé en ce que les rainures ont chacune une largeur allant de 15 à 40 mm, et une profondeur, avantageusement constante, allant de 5 à 25 mm, et en ce que les portions d'appui ont une largeur allant de 50 à 500 mm.

Selon un autre aspect, le revêtement de sol est caractérisé en ce que l'embase intègre une couche de renfort.

Selon un autre aspect, le revêtement de sol est caractérisé en ce que la paroi de fond présente une épaisseur allant de 1 à 5 mm, par exemple de 1 à 3 mm.

Selon un autre aspect de l'invention, la face supérieure et la face inférieure s'étendent parallèlement l'une par rapport à l'autre.

Selon un autre objet de l'invention, une enceinte d'élevage équipée d'un revêtement de sol comprend un couloir de circulation comportant un axe longitudinal et un sol caillebotis recouvert par le revêtement de sol.

Les rainures du revêtement de sol sont agencées parallèlement, ou au moins approximativement parallèlement, par rapport à l'axe longitudinal.

Le sol caillebotis comporte des conduits en forme de fentes, orientés perpendiculairement à l'axe longitudinal du couloir de circulation et en communication fluidique avec les fentes longitudinales du revêtement de sol.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue partielle et en perspective d'un sol caillebotis dans une enceinte d'élevage, recouvert par le revêtement de sol selon l'invention ;
[Fig. 2] est une vue partielle et de dessus illustrant le sol caillebotis recouvert par le revêtement de sol ;
[Fig. 3] est une vue partielle et agrandie de la figure 2 ;
[Fig. 4] est une vue de côté et en coupe, illustrant la communication fluidique entre les conduits du sol caillebotis et les fentes longitudinales du revêtement de sol.

Il est à noter que, sur ces figures, les éléments structurels et/ou fonctionnels communs aux différentes variantes peuvent présenter les mêmes références.

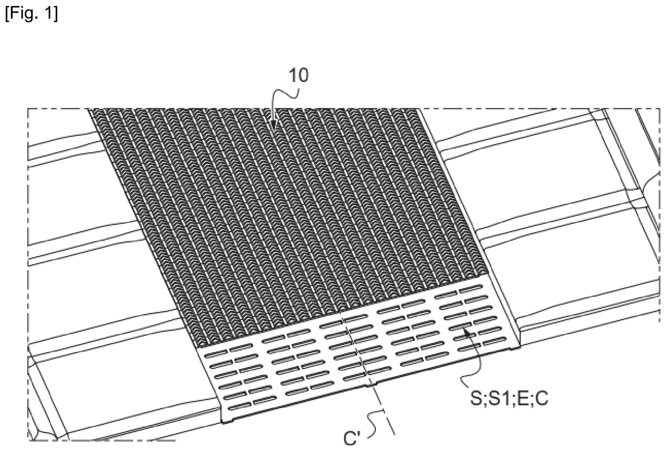

Tel que représenté schématiquement sur la figure 1, la présente invention concerne un revêtement de sol 10 adapté à recouvrir un sol caillebotis S dans une enceinte E pour l'élevage d'animaux, par exemple de bovins.

### Enceinte d'élevage

Par « animaux », on entend notamment les bovins (en particulier les vaches laitières ou les bovins à viande), les porcins, ou encore tout autre animal d'élevage (ovin, volaille, lapin, cheval, etc.).

Une telle enceinte E d'élevage (non représentée) consiste en un bâtiment délimité par un bâti, adapté à l'élevage souhaité (par exemple une étable dans le cas de bovins).

Une partie au moins du sol de cette enceinte E d'élevage est recouverte par le revêtement de sol 10 selon l'invention.

En particulier, le revêtement de sol 10 est avantageusement implanté au niveau des couloirs de circulation qui sont empruntés par les animaux cheminant entre les différents espaces fonctionnels de l'enceinte E d'élevage (par exemple logettes, salles de traite, etc.).

Le couloir de circulation C comporte un axe longitudinal (non représenté), dont le sol est recouvert par ce revêtement de sol 10.

De manière générale, le sol consiste en un sol caillebotis S comportant des conduites S1 qui sont ici en forme de fentes.

Par « sol caillebotis S », on entend en particulier un sol comportant des fentes traversantes S1, dont les dimensions présentent un compromis entre un écoulement des liquides et la stabilité des animaux.

Un tel sol caillebotis S forme alors un plancher ajouré, recouvrant une fosse (non représentée).

De manière générale, les fentes S1 sont rectilignes, de préférence avec un contour rectangulaire ou oblong. Chaque fente S1 comporte avantageusement un axe longitudinal S1'.

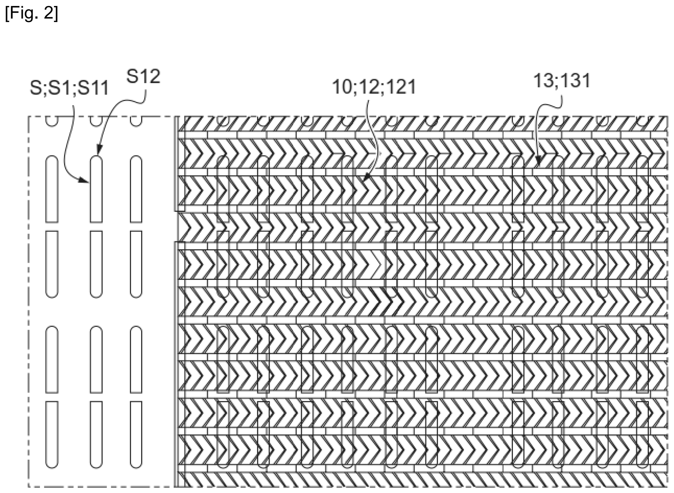

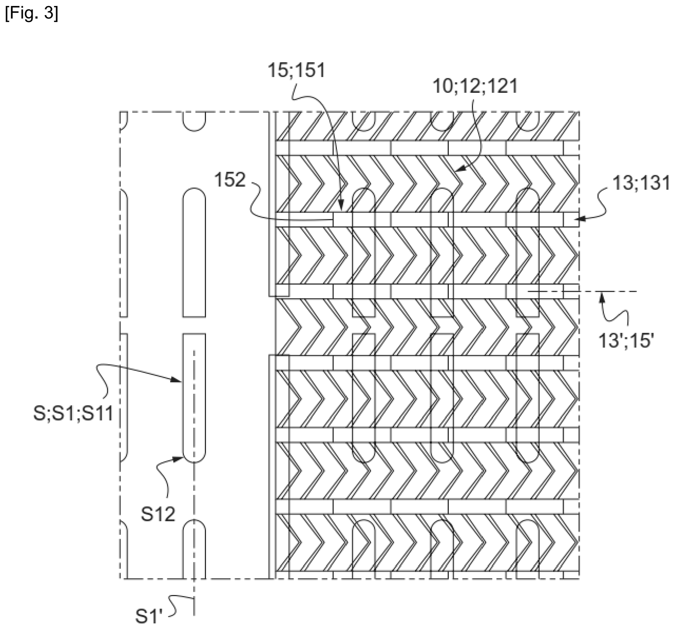

Tel que représenté sur les figures 2 ou 3 notamment, chaque fente S1 est ainsi avantageusement délimitée par :
- deux grands côtés S11, définissant sa cote en largeur et avantageusement son axe longitudinal, et
- deux petits côtés S12, définissant sa cote en longueur.

Les deux grands côtés S11 s'étendent avantageusement parallèlement l'un par rapport à l'autre.

Les deux grands côtés S11 s'étendent avantageusement perpendiculairement à l'axe longitudinal S1' de ce couloir de circulation C.

En d'autres termes et avantageusement, le sol caillebotis S comportent des fentes S1, orientés perpendiculairement à l'axe longitudinal C' du couloir de circulation C.

Par exemple, les fentes S1 présentent avantageusement les cotes suivantes :
- une cote en largeur de 25 à 42 mm et
- une cote en longueur de 350 à 5 000 mm.

De préférence, les fentes S1 sont régulièrement réparties sur le sol caillebotis S, et forme un motif périodique. En particulier, les fentes S1 sont disposées selon des lignes, dans lesquelles les grands côtés S11 sont dans le prolongement les unes des autres. Le sol caillebotis 2 présentent ainsi des fentes S1 disposées selon des lignes régulièrement espacées et parallèles. Au sein d'une même ligne, les fentes S1 sont par exemple régulièrement espacées les unes des autres.

De cette manière, les axes longitudinaux S1' des différentes fentes S1 du sol caillebotis S sont parallèles les uns aux autres.

En pratique, le sol caillebotis S est avantageusement constitué de plusieurs plaques caillebotis, réalisées par exemple en béton.

Ces plaques caillebotis comportent avantageusement un contour carré ou rectangulaire, par exemple :
- une largeur de 500 à 1 200 mm, et
- une longueur de 2 000 à 5 000 mm.

Ces plaques caillebotis du sol caillebotis S sont avantageusement juxtaposées, dans le sens de la largeur et/ou de la longueur.

Sur la figure 1, le sol caillebotis S constitue avantageusement le sol d'un couloir de circulation C qui est délimité par deux bords longitudinaux, définissant sa largeur.

### Revêtement de sol

Le revêtement de sol 10 est apte à collecter les liquides s'écoulant sur le sol et à les évacuer, de sorte à offrir une surface d'appui relativement sèche (ou au moins ne présentant pas une humidité excessive) pour les pieds des animaux, et donc plus saine.

Par « liquides », on entend en particulier les déjections liquides produites par les animaux de l'élevage, en particulier leur urine.

De manière générale, de préférence, le revêtement de sol 10 présente une longueur continue allant de 5 mm à 200 mm.

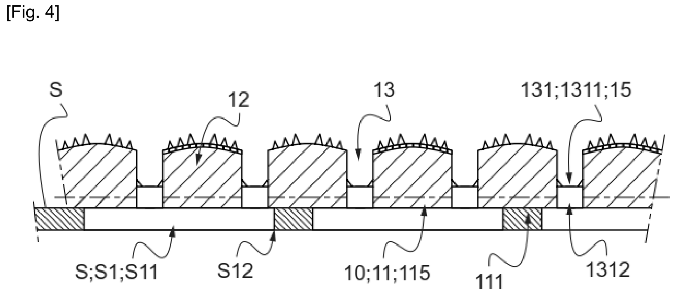

De manière générale, tel que représenté notamment sur la figure 4, le revêtement de sol 10 comprend :
- une embase 11 dont une face inférieure 111 est destinée à reposer sur le sol caillebotis S,
- des portions d'appui 12, réparties sur l'embase 11, sur lesquelles les animaux sont destinés à prendre appui, et
- des rainures 13, séparant les portions d'appui 12 et destinées à recevoir les liquides s'écoulant sur le revêtement de sol 10.

Les portions d'appui 12 ont de préférence une surface plane horizontale ou une surface courbe convexe.

Pour une adhérence optimale, ces portions d'appui 12 sont avantageusement munies de reliefs antidérapants.

Ces portions d'appui 12 peuvent comporter des sillons transversaux 121, débouchant dans les rainures 13, pour participer à l'écoulement des liquides (figure 2).

De manière générale, les rainures 13 sont avantageusement sus-jacentes des fentes S1 ménagées dans le sol.

Ces rainures 13 peuvent croiser transversalement les fentes S1, en particulier pour le sol caillebotis S.

Les rainures 13 sont chacune délimitées par une paroi de fond 131, correspondant à une bande de l'embase 11 ménagée entre deux portions d'appui 12.

Tel que représenté en particulier sur la figure 4, la paroi de fond 131 est délimitée par deux faces :
- une face supérieure 1311, formant le fond de la rainure 13, et
- une face inférieure 1312, formant une partie de la face inférieure 111 de l'embase 11.

Plus précisément, la paroi de fond 131 comporte :
- une cote en épaisseur, définie par la face supérieure 1311 et par la face inférieure 1312,
- une cote en largeur, définie entre deux portions d'appui 12.

Par exemple, la paroi de fond 131 présente une épaisseur allant de 1 à 5 mm, de préférence de 1 à 3mm.

De préférence, la paroi de fond 131 délimitant chaque rainure 13 présente une configuration plane, horizontale et uniforme sur toute sa longueur. La face supérieure 1311, formant le fond de la rainure, et la face inférieure 1312, constituant une partie de la face inférieure 111 de l'embase, s'étendent parallèlement l'une par rapport à l'autre.

Encore en d'autres termes, la face supérieure 1311 est destinée à s'étendre parallèlement par rapport au sol caillebotis S.

Cette paroi de fond 131 est ainsi dépourvue de tout segment incliné, de bossage ou de variation d'angle par rapport au plan horizontal du tapis. Cette géométrie permet de maintenir une épaisseur constante de la paroi de fond 131 sur l'intégralité du profil longitudinal de la rainure 13, cette épaisseur étant préférentiellement comprise entre 1 et 5 mm.

Cette absence de déclivité interne assure avantageusement une communication fluidique directe et immédiate entre la face supérieure du revêtement et le sol caillebotis S via les fentes longitudinales 15, sans nécessiter de guidage gravitaire intermédiaire au sein même de la rainure.

De préférence, les rainures 13 sont rectilignes et s'étendent parallèlement les unes par rapport aux autres, délimitant entre elles une pluralité de portions d'appui 12 qui ont chacune la forme d'une bande rectiligne.

Chaque rainure 13 comporte avantageusement un axe longitudinal 13' ; les axes longitudinaux 13' des différentes rainures 13 s'étendent parallèlement les uns aux autres.

De préférence, les rainures 13 sont réparties sur la largeur du revêtement de sol 10 ; et ces rainures 13 s'étendent sur toute la longueur du revêtement de sol 10.

De préférence, les rainures 13 ont chacune :
- une largeur allant de 15 à 40 mm, et
- une profondeur, avantageusement constante, allant de 5 à 25 mm.

Les portions d'appui 12 ont une largeur allant de 50 à 500 mm.

De préférence, en présence d'un couloir de circulation C comportant un axe longitudinal C', les rainures 13 du revêtement de sol 10 sont agencées parallèlement, ou au moins approximativement parallèlement, par rapport audit axe longitudinal C'.

Et cette paroi de fond 131 comporte des orifices traversants 15 qui débouchent au travers de la face supérieure 1311 et de la face inférieure 1312 de cette paroi de fond 131.

De manière générale (notamment pour un sol caillebotis S), les orifices traversants 15 sont avantageusement régulièrement répartis.

Selon un mode de réalisation, certaines rainures 13 dépourvues de tels orifices traversants 15 participent avantageusement à la résistance structurelle du revêtement de sol 10.

En l'espèce, selon l'invention, les orifices traversants 15 consistent en des fentes longitudinales 15, régulièrement réparties sur la longueur des rainures 13.

Tel que représenté sur la figure 3 notamment, chaque fente longitudinale 15 est ainsi avantageusement délimitée par :
- deux grands côtés 151, définissant sa cote en largeur et avantageusement son axe longitudinal 15', et
- deux petits côtés 152, définissant sa cote en longueur.

Les fentes longitudinales 15 présentent un axe longitudinal 15' orienté parallèlement à l'axe longitudinal 13' des rainures 13.

Chaque fente longitudinale 15 présente une cote en longueur allant de 5 à 35 cm, de préférence de 5 à 20 cm.

De préférence encore, les fentes longitudinales 15 présentent une longueur allant de 5 à 15 cm.

De préférence, la distance entre deux fentes longitudinales 15 successives (correspondant encore à la distance entre les petits côtés 152 de deux fentes longitudinales 15 successives), ménagées au sein d'une rainure 13, est de 5 à 20 cm, de préférence de 5 à 15 cm.

De préférence encore, les fentes longitudinales 15 et les rainures 13 définissent des largeurs qui sont identiques les unes par rapport aux autres. En d'autres termes, la cote en largeur d'une fente longitudinale 15 est identique à la cote en largeur de la rainure 13 associée. Encore en d'autres termes, chaque fente longitudinale 15 s'étend sur toute la largeur de la rainure 13 associée.

De manière générale, le revêtement de sol 10 est avantageusement réalisé dans au moins un matériau apte à subir une déformation élastique.

Les portions d'appui 12 sont avantageusement adaptées à subir une déformation en enfoncement, cela d'au moins 1 mm, et de préférence comprise entre 1 et 5 mm, lors de l'appui du pied de l'animal ou d'une personne.

Par « enfoncement », on entend en particulier une diminution de l'épaisseur entre la portion d'appui et la face inférieure 111 de l'embase 11, par rapprochement des surfaces respectives.

Pour cela, le revêtement de sol 10 est avantageusement réalisé dans au moins un matériau apte à subir une déformation élastique choisi parmi :
- les matériaux élastomères, à savoir par exemple le caoutchouc naturel, le caoutchouc « naturel synthétique » (ou poly-isoprène synthétique), le polybutadiène ou le styrène - butadiène, ou
- les matériaux plastiques ou élastomères thermoplastiques (TPE), à savoir par exemple le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Ce revêtement de sol 10 peut être réalisé :
- mono-matériau, ou
- multi-matériaux, par exemple un premier matériau formant l'embase 11 et un second matériau formant les portions d'appui 12.

Selon un mode de réalisation préféré, l'embase 11 intègre une couche de renfort 115.

La couche de renfort 115 est choisie avantageusement parmi les produits apportant la stabilité et/ou la résistance à l'élongation, par exemple les fibres textiles ou de métal.

Cette couche de renfort 115 consiste par exemple en une armature textile servant de renfort, réalisée avantageusement en matériau choisi parmi le nylon, le coton, le polyester, le polyamide ou tout autre textile de renfort.

Un tel revêtement de sol 10 peut être fabriqué par assemblage d'un ensemble de pièces superposées, pour former un ensemble du type monobloc, par exemple :
- par vulcanisation d'un ensemble de pièces en matériau élastomère,
- par collage,
- par soudage.

### Mise en œuvre

En pratique, le sol caillebotis S de l'enceinte E, par exemple le couloir de circulation C, est recouvert par le revêtement de sol 10.

Les rainures 13 du revêtement de sol 10 sont avantageusement agencées parallèlement, ou au moins approximativement parallèlement, par rapport à l'axe longitudinal S1' de ce sol caillebotis S.

Par exemple, l'axe longitudinal 13' des rainures 13 est avantageusement agencé parallèlement à l'axe longitudinal C' du couloir de circulation C.

Ces rainures 13, et les fentes longitudinales 15 associées, s'étendent alors perpendiculairement par rapport à l'axe longitudinal S1' des fentes S1 qui sont ménagées dans le sol caillebotis S.

Et les fentes S1 du couloir de circulation C sont en communication fluidique avec les fentes longitudinales 15 du revêtement de sol 10.

En effet, certaines au moins des fentes longitudinales 15 coupent au moins un conduit S1 du sol caillebotis S.

De manière générale, les fentes S1 du sol caillebotis S, y compris celles recouvertes par le revêtement de sol 10, sont représentées en traits continus sur les figures 2 et 3 dans un souci de compréhension. Or ces fentes S1 recouvertes par le revêtement de sol 10 restent accessibles uniquement au niveau des orifices traversants 15.

Les liquides s'écoulant dans les rainures 13 passent ainsi à travers les fentes longitudinales 15 et sont ensuite dirigés vers les fentes S1 du sol caillebots S.

Cette communication fluidique assure ainsi une évacuation continue et efficace des liquides, par gravité, réduisant ainsi l'humidité à la surface du revêtement de sol et améliorant les conditions sanitaires pour les animaux.

De plus, la conception des fentes longitudinales 15, avec une cote en longueur supérieure à la cote en largeur, permet de minimiser le risque de colmatage par les déjections solides. Les dimensions des fentes sont choisies pour offrir un compromis optimal entre la capacité d'écoulement des liquides et la stabilité structurelle du revêtement de sol.

Bien entendu, diverses autres modifications peuvent être apportées à l'invention dans le cadre des revendications annexées.

## Revendications

1. Revêtement de sol (10) sous forme d'un tapis, réalisé dans au moins un matériau apte à subir une déformation élastique, adapté à recouvrir un sol caillebotis (S) dans une enceinte (E) d'élevage,
lequel revêtement de sol (10) comporte :
- une embase (11) dont une face inférieure (111) est destinée à reposer sur ledit sol caillebotis (S),
- des portions d'appui (12), réparties sur ladite embase (11), sur lesquelles les animaux sont destinés à prendre appui, et
- des rainures (13), séparant lesdites portions d'appui (12) et destinées à recevoir les liquides s'écoulant sur ledit revêtement de sol (10), définissant un axe longitudinal (13'),
lesquelles rainures (13) sont chacune délimitées par une paroi de fond (131), correspondant à une bande de ladite embase (11) ménagée entre deux portions d'appui (12),
laquelle paroi de fond (131) est délimitée par une face supérieure (1311), formant le fond de ladite rainure (13), et par une face inférieure (1312), formant une partie de ladite face inférieure (111) de l'embase (11),
laquelle paroi de fond (131) comporte des orifices traversants (15) qui débouchent au travers de ladite face supérieure (1311) et de ladite face inférieure (1312) de ladite paroi de fond (131),
**caractérisé en ce que** lesdits orifices traversants (15) consistent en des fentes longitudinales (15), régulièrement réparties sur la longueur desdites rainures (13),
lesquelles fentes longitudinales (15) présentent un axe longitudinal (15') orienté parallèlement à l'axe longitudinal (13') desdites rainures (13) et présentant une longueur allant de 5 à 35 cm, de préférence de 5 à 20 cm.

2. Revêtement de sol (10) selon la revendication 1, **caractérisé en ce que** les fentes longitudinales (15) présentent une longueur allant de 5 à 15 cm.

3. Revêtement de sol (10) selon l'une quelconque des revendications 1 ou 2, **caractérisé en ce que** la distance entre deux fentes longitudinales (15) successives, ménagées au sein d'une rainure (13), est de 5 à 20 cm, de préférence de 5 à 15 cm.

4. Revêtement de sol (10) selon l'une quelconque des revendications 1 à 3, **caractérisé en ce que** les fentes longitudinales (15) et les rainures (13) définissent des largeurs qui sont identiques les unes par rapport aux autres.

5. Revêtement de sol (10) selon l'une quelconque des revendications 1 à 4, **caractérisé en ce que** les rainures (13) sont rectilignes et s'étendent parallèlement les unes par rapport aux autres, délimitant entre elles une pluralité de portions d'appui (12) qui ont chacune la forme d'une bande rectiligne.

6. Revêtement de sol (10) selon l'une quelconque des revendications 1 à 5, **caractérisé en ce que** les rainures (13) ont chacune :
- une largeur allant de 15 à 40 mm, et
- une profondeur, avantageusement constante, allant de 5 à 25 mm, et
**en ce que** les portions d'appui (12) ont une largeur allant de 50 à 500 mm.

7. Revêtement de sol (10) selon l'une quelconque des revendications 1 à 6, **caractérisé en ce que** ladite embase (11) intègre une couche de renfort (115).

8. Revêtement de sol (10) selon l'une quelconque des revendications 1 à 7, **caractérisé en ce que** la paroi de fond (131) présente une épaisseur allant de 1 à 5 mm, par exemple de 1 à 3 mm.

9. Revêtement de sol (10) selon l'une quelconque des revendications 1 à 8, **caractérisé en ce que** la face supérieure (1311) et la face inférieure (1312) s'étendent parallèlement l'une par rapport à l'autre.

10. Enceinte (E) d'élevage équipée d'un revêtement de sol (10) selon l'une quelconque des revendications 1 à 9,
laquelle enceinte (E) d'élevage comporte un couloir de circulation (C) comportant un axe longitudinal (C') et comportant un sol caillebotis (S) recouvert par ledit revêtement de sol (10),
et en ce que les rainures (13) dudit revêtement de sol (10) sont agencées parallèlement, ou au moins approximativement parallèlement, par rapport audit axe longitudinal (C'), lequel sol caillebotis (S) comportent des conduits (S1) en forme de fentes, orientés perpendiculairement à l'axe longitudinal (C') dudit couloir de circulation (C) et en communication fluidique avec les fentes longitudinales (15) dudit revêtement de sol (10).
